# FASCICULE DE BREVET EUROPEEN

(11) **EP 3 280 773 B1**
(45) Date de publication et mention de la délivrance du brevet: **27.02.2019**
(21) Numéro de dépôt: 16714905.3
(22) Date de dépôt: 07.04.2016
(51) Int. Cl.: C01B 25/40, C09B 67/08, C01F 17/00, C09C 1/40, C09C 1/64, C09D 5/08, C09B 69/00, C09D 163/00, C09D 167/00, C09D 175/04, C08K 3/22, C09D 7/61

(54) **PIGMENTS ANTI-CORROSION A BASE DE POLYPHOSPHATE D'ALUMINIUM ET DE TERRE RARE**
KORROSIONSSCHUTZPIGMENTE AUS ALUMINIUMPOLYPHOSPHAT UND SELTENER ERDE
ANTI-CORROSION PIGMENTS MADE OF ALUMINIUM POLYPHOSPHATE AND RARE EARTH

(30) Priorité: 08.04.2015 FR 1553006
(43) Date de publication de la demande: 14.02.2018
(73) Titulaire: Societe Nouvelle Des Couleurs Zinciques, 59111 Bouchain (FR)
(72) Inventeur: BERTELOOT, Christelle, 59179 Fenain (FR); MAVEL, Ludovic, 59111 Hordain (FR)
(74) Mandataire: Esselin, Sophie
(86) Numéro de dépôt international: PCT/EP2016/057583
(87) Numéro de publication internationale: WO 2016/162399

(56) Documents cités:
- FR-A1- 2 857 672
- US-A1- 2012 288 700
- CATUBIG R ET AL: "The use of cerium and praseodymium mercaptoacetate as thiol-containing inhibitors for AA2024-T3", CORROSION SCIENCE, OXFORD, GB, vol. 81, 15 décembre 2013 (2013-12-15), pages 45-53, XP028820604, ISSN: 0010-938X, DOI: 10.1016/J.CORSCI.2013.12.001

## Description

Le domaine de l'invention est celui des pigments anti-corrosion destinés à être incorporés dans des compositions pour l'élaboration de revêtement sur une surface métallique et capable d'assurer notamment une bonne protection de celle-ci.

Avantageusement, la composition peut servir de primaire de peinture, trouvant des applications très diverses pour lesquelles on est amené à proposer des revêtements assurant une bonne protection contre les phénomènes de corrosion.

Dans ce domaine, actuellement des pigments anti-corrosion, tels des chromates sont utilisés en raison de leur efficacité de protection de surface métallique en présence d'eau, d'oxygène, et de tout autre élément susceptible d'altérer les surfaces métalliques, dans des formulations organiques (peintures).

Les surfaces d'intérêt sont généralement des surfaces métalliques que l'on cherche à protéger, dans différents types d'industrie, et peuvent être de fer, d'acier (revêtu ou non de zinc ou d'alliage à base de zinc, d'aluminium, de silicium, de magnésium,...)

Néanmoins, les chromates sont nocifs en raison de leur grand pouvoir oxydant, et doivent être remplacés par d'autres substances aussi efficaces mais exemptes de toxicité.

Pour des substrats en acier galvanisé, il a déjà été proposé des solutions alternatives aux chromates comme par exemple : des pigments de silice échangée au calcium, des pigments comprenant des polyphosphates d'aluminium et du zinc, et/ou du magnésium, et/ou du calcium, et/ou du strontium, etc...

En parallèle des aciers recouverts de zinc, il existe sur le marché mondial d'autres types de revêtement d'acier à base de zinc et d'autres éléments tels que l'aluminium, le silicium, le magnésium, comme par exemple le Galvalume ®(Al : 55%, Zn : 43,5%, Si : 1,5%), le Galfan (Zn : 95 %, Al : 5%).

Néanmoins pour adresser des aciers recouverts de Galvalume ®, peu de solutions spécifiques sont actuellement proposées pour assurer la substitution des chromates comme pigments anti-corrosion. On peut néanmoins citer des pigments anti-corrosion exempts de toxicité tels que le Novinox XCA02 (silice échangée calcium) ou le Novinox PAM (pigment comprenant du tripolyphosphate d'aluminium et du magnésium) du Demandeur, mais qui en termes de performances anti-corrosion n'égalent pas celles des chromates. US 2012/0288700 décrit des pigments anti-corrosion, notamment polyphosphate de type Novinox PAM ou Novinox PAZ à base de polyphosphate et de plusieurs types d'ions métalliques.

C'est pourquoi, dans ce contexte le Demandeur propose une nouvelle famille de pigments anti-corrosion particulièrement bien adaptés à la protection anti-corrosion des aciers recouverts de Galvalume ® et qui sont également adaptés aux aciers recouverts de zinc (acier galvanisé, aussi appelé HDG (hot dipped galvanized)).

Plus précisément la présente invention a pour objet un pigment anti-corrosion comprenant un polyphosphate d'aluminium caractérisé en ce qu'il comprend en outre au moins un composé à base de cérium et/ou un composé à base de lanthane et/ou un composé à base de praséodyme.

Le pigment anti-corrosion de la présente invention est un pigment anti-corrosion particulièrement adapté à des substrats de fer ou d'acier revêtus ou non d'un autre métal.

Selon une variante de l'invention, le polyphosphate d'aluminium est un tripolyphosphate d'aluminium.

Selon une variante de l'invention, le composé est un oxyde.

Selon une variante de l'invention, le composé est un carbonate.

Selon une variante de l'invention, le composé est un oxyde de cérium.

Selon une variante de l'invention, le composé est l'oxyde de cérium CeO₂.

Selon une variante de l'invention, le composé est un oxyde de lanthane.

Selon une variante de l'invention le composé est l'oxyde de lanthane La₂O₃.

Selon une variante de l'invention, le composé est un oxyde de praséodyme.

Selon une variante de l'invention, le composé est l'oxyde de praséodyme Pr₆O₁₁.

Selon une variante de l'invention, le pigment comprend :
- un mélange de composé à base de cérium et de composé à base de lanthane ou ;
- un mélange de composé à base de cérium et de composé à base de praséodyme ;
- ou un mélange de composé à base de lanthane et de composé à base de praséodyme.

Selon une variante de l'invention, le pigment comprend un mélange de composé à base de cérium et de composé à base de lanthane et de composé à base de praséodyme.

Selon une variante de l'invention, ledit pigment comprend un pourcentage pondéral de composé(s) de terre rare compris entre 1% et 30%.

L'invention a aussi pour objet une peinture anti-corrosion destinée à recouvrir une surface métallique, comprenant un pigment anti-corrosion selon l'invention.

Selon une variante de l'invention, ladite peinture est à base de polyester mélamine.

Selon une variante de l'invention, ladite peinture est à base de polyuréthane.

Selon une variante de l'invention, ladite peinture est à base d'époxy.

Selon une variante de l'invention, ladite peinture comprend un pourcentage pondéral de pigment anti-corrosion compris entre 1 et 15%.

L'invention sera mieux comprise et d'autres avantages apparaîtront à la lecture de la description qui va suivre donnée à titre non limitatif.

De manière générale, le pigment anti-corrosion de la présente invention comprend un polyphosphate d'aluminium et au moins un composé à base de cérium et/ou un composé à base de lanthane et/ou un composé à base de praséodyme.

Le Demandeur a réalisé une série de tests prouvant l'intérêt des pigments anti-corrosion de la présente invention, en utilisant un substrat d' acier recouvert de GALVALUME ®, sur lequel est appliqué un traitement de surface, non chromaté selon la présente invention.

### Première série de tests comparatifs réalisés avec un primaire à base de résine polyester mélamine (PE) incorporant un pigment anti-corrosion de l'art connu ou un pigment selon l'invention :

Le Demandeur a effectué des tests de réticulation pour vérifier la bonne stabilité dans le temps de primaire à base de résine polyester mélamine (PE) et des pigments proposés dans la présente invention à base de cérium ou de lanthane ou de praséodyme, en raison de la présence d'un catalyseur le Nacure 2500, sensible à des espèces alcalines.

Pour mener à bien ces tests, on réalise un primaire anticorrosion incorporant des composés pigmentaires (7% en poids) dans une résine de type polyester mélamine d'épaisseur 7 µm, de composition détaillée suivante :

| **Matières Premières** | **% Poids** | **Description** | **Fournisseurs** |
|---|---|---|---|
| | | | |
| CYMEL 303 | 5,4 | HMMM | ALLNEX |
| DESMOPHEN 1665 | 47,6 | Résine Polyester | BAYER |
| SOLVESSO 150 | 10,7 | Solvant Aromatique | EXXON CHEMICAL |
| DOWANOL PMA | 15,4 | Solvant Ester de Glycol | DOW |
| | | | |

| ***Mélanger jusqu'à obtention d'une préparation homogène*** | | | |
|---|---|---|---|
| | | | |
| | **7,0** | **Pigment anticorrosion** | |
| TiO2 RTC90 | 6,5 | Charge | HUNSTMANN |
| TALC HAR T84 | 6,5 | Charge | IMERYS |
| AEROSIL R972 | 0,4 | Silice | EVONIK |

| ***Broyage billes*** | | | |
|---|---|---|---|
| NACURE 2500 | 0,5 | Catalyseur | KING INDUSTRIES |
| **Poids Total** | **100** | | |

### Propriétés du primaire obtenu :

Le primaire présente :
- une concentration en volume pigmentaire (CVP) de 19,70 % ;
- un ratio Pigment/Liant (en volume) de 0,25;
- une épaisseur de film sec de 7 µm.

On applique le primaire anti-corrosion ainsi obtenu sur l'acier recouvert de GALVALUME ® traité, à l'aide d'une tige filetée pour réaliser des tests de stabilité dans le temps.

### Tests de réticulation :

Le Demandeur a effectué des tests comparatifs de la réticulation et de la stabilité du primaire dans le temps selon le test de réticulation MEK dont le résultat du test est un nombre d'allers et retours au bout duquel l'application d'un tissu imprégné de MEK (méthyléthyl cétone), détruit le primaire, le test étant renouvelé au cours du temps, les résultats étant fournis à l'issue de J jours dans le tableau donné ci-après.

Les pigments de l'art connu :
- L203E (chromate de strontium), Novinox PAM, Novinox XCA02 (silice échangée calcium), Novinox ACE110 (à base de silice), et Novinox PAZ (pigment comprenant du polyphosphate d'aluminium et du zinc) ;
sont ainsi comparés à des pigments de la présente invention :
- ATP 94% / CeO₂ 6%, ATP 94% / Ce(CO₃)₂ 6%, ATP 94% / La₂O₃ 6%, ATP 94% / Pr₆O₁₁ 6%

| **A et R MEK** | **J = 0** | **J = 45** |
|---|---|---|
| **L203E** | 52 | 50 |
| **Novinox PAM** | 2 | 1 |
| **Novinox XCA02** | >100 | >100 |
| **Novinox ACE110** | >100 | >100 |
| **Novinox PAZ** | >100 | >100 |
| **ATP94%/CeO₂ 6%** | >100 | 90 |
| **ATP94%/Ce(CO₃)₂ 6%** | >100 | >100 |
| **ATP94%/La₂O₃ 6%** | 94 | 93 |
| **ATP94%/Pr₆O₁₁ 6%** | >100 | >100 |

Les résultats de ces tests montrent une bonne performance et une bonne stabilité dans le temps obtenus avec les pigments proposés dans la présente invention à base de cérium ou de lanthane ou de praséodyme.

En effet, les composés anti-corrosion de la présente invention : ATP 94%/CeO₂ 6%, ATP 94%/Ce(CO₃)₂ 6%, ATP94%/La₂O₃ 6% et ATP94%/Pr₆O₁₁ 6% montrent des performances beaucoup plus satisfaisantes qu'avec le pigment NOVINOX PAM dans un primaire dit PE/mélamine et des performances similaires à celles obtenues avec des pigments exempts de chromates, à base de silice tels que le NOVINOX XCA02 et NOVINOX ACE110 ou avec des pigments à base de polyphosphate d'aluminium tels que le NOVINOX PAZ.

### Tests anti-corrosion :

Pour réaliser des tests anti-corrosion, les primaires sont recouverts d'une couche de peinture à base de polyester mélamine de 20 µm d'épaisseur, encore dénommée couramment couche de finition.

On réalise deux griffes en surface :
- Griffe droite de type Clemens avec une pression exercée de 27 psi (pound per square inch) ;
- Griffe gauche de type Couteau, avec une pression exercée de 5 psi (pound per square inch).

L'ensemble est soumis à l'exposition d'un brouillard salin (norme ASTM B117) durant 500 heures.

### Cotation des griffes et des tranches :

On utilise le stéréomicroscope LEICA EZ4HD et le logiciel associé d'analyse d'images.

On photographie les 2 griffes et les 2 tranches en lumière rasante à l'aide du stéréomicroscope.

Il existe un contraste très net entre la surface peinte et la surface dégradée. Cette différence de contraste est repérée par le logiciel. Grâce à une fonction du logiciel on peut caractériser la zone dégradée. La surface de cette zone dégradée est ensuite calculée à l'aide d'une fonction du logiciel. Elle est exprimée en mm² de dégradation.

### Cotation de la pleine plaque :

On estime la surface dégradée en calculant la surface de chaque cloque formée sur la plaque. Les cloques n'étant pas très nombreuses et relativement de petite taille, il est rapide de faire la somme de l'ensemble des cloques en mm².

### Cotation générale :

Pour obtenir la surface dégradée totale en mm², on additionne ensuite les différentes surfaces dégradées : griffe clemens+griffe couteau+tranche gauche+tranche droite+pleine plaque.

On mesure ensuite la surface totale de chaque plaque.

On obtient la surface non dégradée en mm² par soustraction : surface totale-surface dégradée.

La performance anticorrosion en pourcentage est déterminée par la formule suivante : (surface non dégradée/surface totale)*100

Les longueurs de griffes et de tranches sont les mêmes d'une plaque à l'autre. On peut donc effectuer la comparaison de la performance anticorrosion entre chaque plaque.

| | Griffe gauche mm² | Griffe droite mm² | Tranche gauche mm² | Tranche droite mm² | Pleine plaque mm² | Dégradation totale mm² | Performance anticorrosion % |
|---|---|---|---|---|---|---|---|
| **ATP 100%** | 294 | 193 | 1061 | 1145 | 20 | 2713 | **72,6** |
| **ATP 97% / CeO₂ 3%** | 91 | 113 | 803 | 706 | 0 | 1713 | **82,7** |
| **ATP 94% / CeO₂ 6%** | 97 | 77 | 785 | 739 | 0 | 1698 | **82,8** |
| **ATP 75 % / CeO₂ 25%** | 83 | 128 | 776 | 725 | 0 | 1712 | **82,7** |
| **ATP 50 % / CeO₂ 50 %** | 90 | 77 | 845 | 1343 | 40 | 2395 | **75,8** |
| **ATP 25 % / CeO₂ 75 %** | 263 | 236 | 917 | 1304 | 0 | 2720 | **72,5** |
| **CeO₂ 100 %** | 452 | 389 | 1865 | 1436 | 0 | 4142 | **58,2** |
| **ATP 94% / La₂O₃ 6%** | 116 | 111 | 862 | 646 | 0 | 1735 | **81,6** |
| **ATP 75 % / La₂O₃ 25 %** | 123 | 104 | 851 | 854 | 0 | 1932 | **80,5** |
| **ATP 50 % / La₂O₃ 50 %** | 127 | 96 | 846 | 841 | 20 | 1930 | **80,5** |
| **ATP 25 % / La₂O₃ 75 %** | 124 | 118 | 850 | 836 | 20 | 1948 | **80,3** |
| **La₂O₃ 100 %** | 133 | 129 | 821 | 829 | 40 | 1952 | **80,3** |
| **ATP 94% / Pr₆O₁₁ 6%** | 109 | 91 | 879 | 636 | 0 | 1715 | **82,6** |
| **ATP 75 % / Pr₆O₁₁ 25 %** | 95 | 91 | 864 | 670 | 20 | 1740 | **82,4** |
| **ATP 50 % / Pr₆O₁₁ 50 %** | 88 | 86 | 792 | 756 | 20 | 1742 | **82,4** |
| **ATP 25 % / Pr₆O₁₁ 75 %** | 86 | 97 | 812 | 763 | 0 | 1758 | **82,2** |
| **Pr₆O₁₁ 100 %** | 98 | 92 | 823 | 722 | 40 | 1775 | **82,1** |
| **ATP 94 % Ce(CO₃)₂ 6 %** | 268 | 283 | 820 | 1231 | 60 | 2662 | **73,0** |
| **L203E** | 171 | 123 | 870 | 777 | 0 | 1941 | **80,3** |
| **Novinox PAM** | 196 | 108 | 815 | 759 | 0 | 1878 | **80,9** |
| **Novinox XCA02** | 185 | 118 | 955 | 1246 | 20 | 2524 | **74,4** |
| **Novinox ACE110** | 235 | 97 | 837 | 1123 | 15 | 2307 | **76,6** |
| **Novinox PAZ** | 182 | 112 | 1358 | 837 | 15 | 2504 | **74,6** |

Il ressort de l'ensemble de ces tests que :
- les mélanges d'ATP et de composés à base de cérium ou de lanthane ou de praséodyme fournissent de meilleurs résultats en termes de performances anticorrosion sur Galvalume ® que ceux obtenus avec de l'ATP seul ou avec un composé à base de cérium ou de lanthane ou de praséodyme, seul ;
- les compositions comprenant 94% d'ATP et 6% d'oxyde de cérium ou de lanthane ou de praséodyme conduisent à de très bons résultats, pouvant même être meilleurs que ceux obtenus avec le chromate de strontium.

Il est possible que le cérium ou le lanthane ou le praséodyme puissent bloquer les sites cathodiques en formant des hydroxydes et oxydes insolubles à la surface du zinc, conduisant à une diminution de la densité de courant et donc à une réduction du processus de corrosion.

En conclusion, de très bonnes performances combinées en termes de tests de réticulation et de performance anticorrosion valident l'intérêt des pigments de la présente invention dans le cadre de primaire à base de polyester mélamine.

### Seconde série de tests comparatifs réalisés avec un primaire à base de résine polyuréthane (PU) incorporant un pigment anti-corrosion de l'art connu ou un pigment selon l'invention :

Il est à noter que le Demandeur n'a pas eu à effectuer de tests de réticulation et de contrôle de stabilité dans le temps, en raison de la neutralité au niveau du pH du catalyseur employé : le DBTL.

Pour mener à bien ces tests, on réalise un primaire anticorrosion incorporant des composés pigmentaires (7% en poids) dans une résine de type polyuréthane d'épaisseur 7 µm, de composition détaillée suivante :

| **Matières premières** | **% Poids** | **Description** | **Fournisseur** |
|---|---|---|---|
| Mélanger dans l'ordre suivant : | | | |
| DESMOPHEN 1665 | 38,70 | Résine Polyester | BAYER |
| SOLVESSO 150 | 11,8 | Hydrocarbone aromatique, Solvant | EXXON CHEMICAL |
| DOWANOL PMA | 11,8 | Ester de glycol, solvant | DOW |
| Mélanger jusqu'à obtenir une composition homogène | | | |
| **Pigment anticorrosion** | **7,0** | **Inhibiteur de corrosion** | |
| TiO2 RTC90 | 7,4 | Oxyde de Titane, rutile | HUNSTMANN |
| TALC HAR T84 | 7,4 | Talc, charge minérale | IMERYS Talc |
| AEROSIL R972 | 1,0 | Silice de pyrogénation | DEGUSSA |
| Broyer jusqu'à obtention d'une finesse Hegman de 8 | | | |
| DESMODUR BL 3175 | 14,30 | Polyisocyanate bloqué | BAYER |
| DBTL | 0,5 | Catalyseur | |
| **Poids total** | 100,0 | | |

### Propriétés du primaire obtenu :

Le primaire présente :
- une concentration en volume pigmentaire (CVP) de 22,11 % ;
- un ratio Pigment/Liant (en volume) de 0,28 ;
- une épaisseur de film sec de 7 µm.

On applique le primaire anti-corrosion ainsi obtenu sur l'acier recouvert de GALVALUME ® traité, à l'aide d'une tige filetée.

Pour réaliser des tests anti-corrosion, les primaires sont recouverts d'une couche de peinture à base de polyester Mélamine de 20 µm d'épaisseur, encore dénommée couramment couche de finition.

On réalise deux griffes en surface :
- Griffe droite de type Clemens avec une pression exercée de 27 psi (pound per square inch) ;
- Griffe gauche de type Couteau, avec une pression exercée de 5 psi (pound per square inch).

L'ensemble est soumis à l'exposition d'un brouillard salin (norme ASTM B117) durant 500 heures.

Le processus de cotation est identique à celui déployé dans le cas précédent de résine PE mélamine

Les tests comparatifs ont été menés sur des pigments de l'art connu :
- L203E (chromate de strontium), Novinox PAM, Novinox PAT 15 (phosphate de magnésium) ;
et sont ainsi comparés à des pigments de la présente invention :
- ATP94%/CeO₂ 6%, ATP94%/La₂O₃ 6%, ATP89,3%/CeO2 5,7%/ La₂O₃ 5%

| | Griffe gauche mm² | Griffe droite mm² | Tranche gauche mm² | Tranche droite mm² | Pleine plaque mm² | Dégradation totale mm² | **Performance anticorrosion %** |
|---|---|---|---|---|---|---|---|
| **L203E** | 82 | 46 | 633 | 226 | 4 | 992 | **89,9** |
| **Novinox PAM** | 176 | 245 | 856 | 774 | 36 | 2087 | **78,8** |
| **Novinox PAT 15** | 167 | 160 | 795 | 797 | 100 | 2020 | **79,5** |
| **ATP94%/CeO₂ 6%** | 172 | 133 | 809 | 911 | 54 | 2080 | **78,9** |
| **ATP94%/La₂O₃ 6%** | 438 | 113 | 693 | 810 | 49 | 2103 | **78,7** |
| **ATP 89,3% / CeO₂ 5,7%/ La₂O₃ 5%** | 191 | 149 | 739 | 731 | 9 | 1819 | **81,6** |

Ces résultats de test montrent également des performances tout à fait satisfaisantes et à un niveau comparable à celles obtenues avec le L203E (chromate de strontium toxique) lors des tests anticorrosion pour des pigments anti-corrosion de l'invention, exempts de toxicité dans le cadre de primaire polyuréthane et ce particulièrement avec l'emploi de compositions renfermant différentes espèces de terres rares.

### Troisième série de tests comparatifs réalisés avec un primaire à base de résine époxy incorporant un pigment anti-corrosion de l'art connu ou un pigment selon l'invention :

Pour mener à bien ces tests, on réalise un primaire anticorrosion incorporant des composés pigmentaires (7% en poids) dans une résine de type époxy d'épaisseur 7 µm, de composition détaillée suivante :

| **Matières premières** | **% Poids** | **Description** | **Fournisseur** |
|---|---|---|---|
| EPIKOTE 1007 | 25.1 | Résine Epoxy | HEXION |
| DOWANOL PMA | 19.1 | Ester de glycol, solvant | DOW |
| SOLVESSO 150 | 14.4 | Hydrocarbure aromatique, solvant | EXXON CHEMICAL |
| DIAL | 1.8 | alcool diacetone | |
| AIB | 5.4 | alcool Isobutylique | |
| Mélanger jusqu'à obtenir une composition homogène | | | |
| CYMEL 1123 | 10.75 | Résine benzzoguanamine modifiée | ALLNEX |
| COATOSIL MP200 | 1 | Silane additif | MOMENTIVE |
| Mélanger pendant 30 minutes jusqu'à obtention d'une préparation homogène | | | |
| **PIGMENT ANTICORROSION** | **7** | **pigment anticorrosion** | **SNCZ** |
| TiO2 RTC90 | 7 | Oxyde de titane, rutile | HUNSTMANN |
| TALC HAR T84 | 8 | Talc, charge minérale | RIO TINTO Minerals |
| Broyer jusqu'à obtention d'une finesse Hegman de 7,5 | | | |
| NACURE 2500 | 0.5 | catalyseur | KING Industrie |
| **TOTAL WEIGHT** | 100,0 | **CVP:17.74 ESV:46.14 P/L vol 0.22** | |

### Propriétés du primaire obtenu :

Le primaire présente :
- une concentration en volume pigmentaire (CVP) de 17,74 % ;
- un ratio Pigment/Liant (en volume) de 0,22 ;
- une épaisseur de film sec de 7 µm.

On applique le primaire anti-corrosion ainsi obtenu sur l'acier recouvert de GALVALUME ® traité, à l'aide d'une tige filetée

Pour réaliser des tests anti-corrosion, les primaires sont recouverts d'une couche de peinture à base de polyester Mélamine de 20 µm d'épaisseur, encore dénommée couramment couche de finition.

On réalise deux griffes en surface :
- Griffe droite de type Clemens avec une pression exercée de 27 psi (pound per square inch) ;
- Griffe gauche de type Couteau, avec une pression exercée de 5 psi (pound per square inch).

L'ensemble est soumis à l'exposition d'un brouillard salin (norme ASTM B117) durant 500 heures.

Le processus de cotation est identique à celui déployé dans le cas précédent de résine PE mélamine.

Les tests comparatifs ont été menés sur des pigments de l'art connu :
- L203E (chromate de strontium), Novinox XCA02, Novinox PAM, Novinox PAT 15 (phosphate de magnésium) ;
et sont ainsi comparés à un pigment de la présente invention :
- ATP 94% / CeO₂ 6%,

| | Griffe gauche mm² | Griffe droite mm² | Tranche gauche mm² | Tranche droite mm² | Pleine plaque mm² | Dégradation totale mm² | **Performance anticorrosion %** |
|---|---|---|---|---|---|---|---|
| **ATP94%/CeO₂ 6%** | 88 | 81 | 297 | 339 | 8 | 814 | **90,4** |
| **Novinox XCA02** | 93 | 112 | 263 | 345 | 0 | 814 | **90,4** |
| **Novinox PAT 15** | 121 | 136 | 281 | 345 | 0 | 884 | **89,6** |
| **L203E** | 95 | 136 | 422 | 245 | 0 | 899 | **89,4** |
| **Novinox PAM** | 128 | 121 | 305 | 345 | 0 | 899 | **89,4** |

Ces résultats de test montrent également des performances tout à fait satisfaisantes et à un niveau comparable à celles obtenues avec le L203E (chromate de strontium toxique) lors des tests anticorrosion pour des pigments anti-corrosion de l'invention, exempts de toxicité dans le cadre de primaire époxy appliqué sur Galvalume® et ce particulièrement avec l'emploi de compositions renfermant différentes espèces de terres rares.

### Quatrième série de tests comparatifs réalisés avec un primaire à base de résine époxy incorporant un pigment anti-corrosion de l'art connu ou un pigment selon l'invention :

Pour mener à bien ces tests, on réalise un primaire anticorrosion incorporant des composés pigmentaires (7% en poids) dans une résine de type époxy d'épaisseur 7 µm, de composition identique à celle de la troisième série de tests.

### Propriétés du primaire obtenu :

Le primaire présente :
- une concentration en volume pigmentaire (CVP) de 17,74 % ;
- un ratio Pigment/Liant (en volume) de 0,22 ;
- une épaisseur de film sec de 7 µm.

On applique le primaire anti-corrosion ainsi obtenu sur l'acier galvanisé (HDG) traité, à l'aide d'une tige filetée.

Pour réaliser des tests anti-corrosion, les primaires sont recouverts d'une couche de peinture à base de polyester Mélamine de 20 µm d'épaisseur, encore dénommée couramment couche de finition.

On réalise deux griffes en surface :
- Griffe droite de type Clemens avec une pression exercée de 25 psi (pound per square inch) ;
- Griffe gauche de type Couteau, avec une pression exercée de 5 psi (pound per square inch).

L'ensemble est soumis à l'exposition d'un brouillard salin (norme ASTM B117) durant 500 heures.

Le processus de cotation est identique à celui déployé dans le cas précédent de résine PE mélamine.

Les tests comparatifs ont été menés sur des pigments de l'art connu :
- L203E (chromate de strontium), Novinox XCA02, Novinox ACE110 ;
et sont ainsi comparés à un pigment de la présente invention :
- ATP 94% / CeO₂ 6%,

| | Griffe gauche mm² | Griffe droite mm² | Tranche gauche mm² | Tranche droite mm² | Pleine plaque mm² | Dégradation totale mm² | **Performance anticorrosion %** |
|---|---|---|---|---|---|---|---|
| **L203E** | 69 | 68 | 165 | 255 | 0 | 557 | **94,3** |
| **ATP94%/CeO₂ 6%** | 202 | 455 | 228 | 211 | 0 | 1096 | **89,4** |
| **Novinox ACE110** | 236 | 375 | 242 | 218 | 0 | 1071 | **89,0** |
| **Novinox XCA02** | 500 | 447 | 250 | 218 | 0 | 1417 | **85,5** |

Ces résultats de test montrent également des performances tout à fait satisfaisantes et à un niveau comparable à celles obtenues avec le L203E (chromate de strontium toxique) lors des tests anticorrosion pour des pigments anti-corrosion de l'invention, exempts de toxicité dans le cadre de primaire époxy appliqué sur acier galvanié (HDG) et ce particulièrement avec l'emploi de compositions renfermant différentes espèces de terres rares.

## Revendications

1. Pigment anti-corrosion comprenant un polyphosphate d'aluminium **caractérisé en ce qu'**il comprend en outre au moins un composé à base de cérium et/ou un composé à base de lanthane et/ou un composé à base de praséodyme.

2. Pigment anti-corrosion selon la revendication 1, **caractérisé en ce que** le polyphosphate d'aluminium est un tripolyphosphate d'aluminium.

3. Pigment anti-corrosion selon l'une des revendications 1 ou 2, **caractérisé en ce que** le composé est un oxyde.

4. Pigment anti-corrosion selon l'une des revendications 1 ou 2, **caractérisé en ce que** le composé est un carbonate.

5. Pigment anti-corrosion selon la revendication 3, **caractérisé en ce qu'**il comprend un oxyde de cérium.

6. Pigment anti-corrosion selon la revendication 5, **caractérisé en ce qu'**il comprend l'oxyde de cérium CeO₂.

7. Pigment anti-corrosion selon la revendication 3, **caractérisé en ce qu'**il comprend un oxyde de lanthane.

8. Pigment anti-corrosion selon la revendication 7, **caractérisé en ce qu'**il comprend l'oxyde de lanthane La₂O₃.

9. Pigment anti-corrosion selon la revendication 3, **caractérisé en ce qu'**il comprend un oxyde de praséodyme.

10. Pigment anti-corrosion selon la revendication 9, **caractérisé en ce qu'**il comprend l'oxyde de praséodyme Pr₆O₁₁.

11. Pigment anti-corrosion selon l'une des revendications 1 à 10, **caractérisé en ce qu'**il comprend un mélange de composé à base de cérium et de composé à base de lanthane.

12. Pigment anti-corrosion selon l'une des revendications 1 à 10, **caractérisé en ce qu'**il comprend un mélange de composé à base de cérium et de composé à base de praséodyme.

13. Pigment anti-corrosion selon l'une des revendications 1 à 10, **caractérisé en ce qu'**il comprend un mélange de composé à base de lanthane et de composé à base de praséodyme.

14. Pigment anti-corrosion selon l'une des revendications 1 à 10, **caractérisé en ce qu'**il comprend un mélange de composé à base de cérium et de composé à base de lanthane et de composé à base de praséodyme.

15. Pigment anti-corrosion selon l'une des revendications 1 à 14, **caractérisé en ce qu'**il comprend un pourcentage pondéral de composé(s) à base de terre rare compris entre 1% et 30%.

16. Peinture anti-corrosion destinée à recouvrir une surface métallique, comprenant un pigment anti-corrosion selon l'une des revendications précédentes.

17. Peinture anti-corrosion selon la revendication 16, **caractérisée en ce qu'**elle est à base de polyester mélamine.

18. Peinture anti-corrosion selon la revendication 16, **caractérisée en ce qu'**elle est à base de polyuréthane.

19. Peinture anti-corrosion selon la revendication 16, **caractérisée en ce qu'**elle est à base d'époxy.

20. Peinture anti-corrosion selon l'une des revendications 16 à 19, **caractérisée en ce qu'**elle comprend un pourcentage pondéral de pigment anti-corrosion compris entre 1 et 15%.

## Patentansprüche

1. Korrosionsschutzpigment, welches ein Aluminiumpolyphosphat beinhaltet, **dadurch gekennzeichnet, dass** es zudem mindestens eine Verbindung auf der Grundlage von Cer und/oder eine Verbindung auf der Grundlage von Lanthan und/oder eine Verbindung auf der Grundlage von Praseodym beinhaltet.

2. Korrosionsschutzpigment nach Anspruch 1, **dadurch gekennzeichnet, dass** das Aluminiumpolyphosphat ein Aluminiumtripolyphosphat ist.

3. Korrosionsschutzpigment nach einem der Ansprüche 1 oder 2, **dadurch gekennzeichnet, dass** die Verbindung ein Oxid ist.

4. Korrosionsschutzpigment nach einem der Ansprüche 1 oder 2, **dadurch gekennzeichnet, dass** die Verbindung ein Carbonat ist.

5. Korrosionsschutzpigment nach Anspruch 3, **dadurch gekennzeichnet, dass** es ein Ceroxid beinhaltet.

6. Korrosionsschutzpigment nach Anspruch 5, **dadurch gekennzeichnet, dass** es Ceroxid CeO₂ beinhaltet.

7. Korrosionsschutzpigment nach Anspruch 3, **dadurch gekennzeichnet, dass** es ein Lanthanoxid beinhaltet.

8. Korrosionsschutzpigment nach Anspruch 7, **dadurch gekennzeichnet, dass** es Lanthanoxid La₂O₃ beinhaltet.

9. Korrosionsschutzpigment nach Anspruch 3, **dadurch gekennzeichnet, dass** es ein Praseodymoxid beinhaltet.

10. Korrosionsschutzpigment nach Anspruch 9, **dadurch gekennzeichnet, dass** es Praseodymoxid Pr₆O₁₁ beinhaltet.

11. Korrosionsschutzpigment nach einem der Ansprüche 1 bis 10, **dadurch gekennzeichnet, dass** es eine Mischung aus einer Verbindung auf der Grundlage von Cer und einer Verbindung auf der Grundlage von Lanthan beinhaltet.

12. Korrosionsschutzpigment nach einem der Ansprüche 1 bis 10, **dadurch gekennzeichnet, dass** es eine Mischung aus einer Verbindung auf der Grundlage von Cer und einer Verbindung auf der Grundlage von Praseodym beinhaltet.

13. Korrosionsschutzpigment nach einem der Ansprüche 1 bis 10, **dadurch gekennzeichnet, dass** es eine Mischung aus einer Verbindung auf der Grundlage von Lanthan und einer Verbindung auf der Grundlage von Praseodym beinhaltet.

14. Korrosionsschutzpigment nach einem der Ansprüche 1 bis 10, **dadurch gekennzeichnet, dass** es eine Mischung aus einer Verbindung auf der Grundlage von Cer und einer Verbindung auf der Grundlage von Lanthan und einer Verbindung auf der Grundlage von Praseodym beinhaltet.

15. Korrosionsschutzpigment nach einem der Ansprüche 1 bis 14, **dadurch gekennzeichnet, dass** es einen Gewichtsprozentsatz an Verbindung(en) auf der Grundlage von Seltenerden zwischen 1 % und 30 % beinhaltet.

16. Korrosionsschutzfarbe, welche dazu bestimmt ist, eine metallene Oberfläche zu bedecken, beinhaltend ein Korrosionsschutzpigment nach einem der vorhergehenden Ansprüche.

17. Korrosionsschutzfarbe nach Anspruch 16, **dadurch gekennzeichnet, dass** sie eine Farbe auf der Grundlage von Polyester-Melamin ist.

18. Korrosionsschutzfarbe nach Anspruch 16, **dadurch gekennzeichnet, dass** sie eine Farbe auf der Grundlage von Polyurethan ist.

19. Korrosionsschutzfarbe nach Anspruch 16, **dadurch gekennzeichnet, dass** sie eine Farbe auf der Grundlage von Epoxid ist.

20. Korrosionsschutzfarbe nach einem der Ansprüche 16 bis 19, **dadurch gekennzeichnet, dass** sie einen Gewichtsprozentsatz an Korrosionsschutzpigment zwischen 1 % und 15 % beinhaltet.

## Claims

1. An anticorrosive pigment comprising an aluminum polyphosphate, **characterized in that** it additionally comprises at least one cerium-based compound and/or one lanthanum-based compound and/or one praseodymium-based compound.

2. The anticorrosive pigment according to claim 1, **characterized in that** the aluminum polyphosphate is an aluminum tripolyphosphate.

3. The anticorrosive pigment according to any of claims 1 or 2, **characterized in that** the compound is an oxide.

4. The anticorrosive pigment according to any of claims 1 or 2, **characterized in that** the compound is a carbonate.

5. The anticorrosive pigment according to claim 3, **characterized in that** it comprises a cerium oxide.

6. The anticorrosive pigment according to claim 5, **characterized in that** it comprises cerium oxide CeO₂.

7. The anticorrosive pigment according to claim 3, **characterized in that** it comprises a lanthanum oxide.

8. The anticorrosive pigment according to claim 7, **characterized in that** it comprises lanthanum oxide La₂O₃.

9. The anticorrosive pigment according to claim 3, **characterized in that** it comprises a praseodymium oxide.

10. The anticorrosive pigment according to claim 9, **characterized in that** it comprises praseodymium oxide Pr₆O₁₁.

11. The anticorrosive pigment according to any of claims 1 to 10, **characterized in that** it comprises a mixture of cerium-based compound and of lanthanum-based compound.

12. The anticorrosive pigment according to any of claims 1 to 10, **characterized in that** it comprises a mixture of cerium-based compound and of praseodymium-based compound.

13. The anticorrosive pigment according to any of claims 1 to 10, **characterized in that** it comprises a mixture of lanthanum-based compound and of praseodymium-based compound.

14. The anticorrosive pigment according to any of claims 1 to 10, **characterized in that** it comprises a mixture of cerium-based compound and of lanthanum-based compound and of praseodymium-based compound.

15. The anticorrosive pigment according to any of claims 1 to 14, **characterized in that** it comprises a percentage by weight of compound(s) based on rare earth metal of between 1% and 30%.

16. An anticorrosive paint intended to cover a metal surface, comprising an anticorrosive pigment according to any of the preceding claims.

17. The anticorrosive paint according to claim 16, **characterized in that** it is based on polyester-melamine.

18. The anticorrosive paint according to claim 16, **characterized in that** it is based on polyurethane.

19. The anticorrosive paint according to claim 16, **characterized in that** it is epoxy-based.

20. The anticorrosive paint according to any of claims 16 to 19, **characterized in that** it comprises a percentage by weight of anticorrosive pigment of between 1% and 15%.
